# EUROPEAN PATENT APPLICATION

(11) **EP 2 136 590 A1**
(43) Date of publication of application: **23.12.2009**
(21) Application number: 08104487.7
(22) Date of filing: 20.06.2008
(51) Int. Cl.: H04W 36/30

(54) **Method for performing a serving cell change in a high-speed packet access enabled wireless telecommunication network and user equipment device**

(71) Applicant: Nokia Siemens Networks Oy, 02610 Espoo (FI)
(72) Inventor: Holma, Harri, 00660, Helsinki (FI); Ranta-aho, Karri, 02650, Espoo (FI); Toskala, Antti, 02180, Espoo (FI)
(74) Representative: Bruglachner, Thomas E.

(57) **Abstract**

The invention relates to a method for performing a serving cell change for a user equipment device in a high-speed packet access enabled wireless telecommunication network, wherein the user equipment device performs the steps of:
- measuring the signal strengths of cells out of an active set of cells of the wireless telecommunication network,
- sending a measurement report with a result of said measurement to a radio network controller of said wireless telecommunication network,
- deciding whether at least one target cell out of the active set provides stronger signals than said serving cell,
- decoding at least one control channel of said target cell, and
- performing a serving cell change to the target cell upon receiving a serving cell change indication over the control channel of the target cell.

In order to use the radio resources more effectively, it is proposed to transmit the serving cell change indication in at least one transmission and/or reception gap between periodic packet transmissions and/or receptions relating to the user equipment device.

## Description

### 1. Field of the Invention

The invention relates to a method for performing a serving cell change for a user equipment device in a high-speed packet access (HSPA) enabled wireless telecommunication network and to a user equipment device for use in a high-speed packet access enabled wireless telecommunication network.

### 2. Background of the Invention

The invention relates to the field of high-speed packet access (HSPA) enabled telecommunication networks, in particular to telecommunication networks following the standard 3GPP release 7 and beyond. The use of real-time services such as circuit switched voice services over HSPA requires more from the HSPA mobility than normal packet switched connections since voice delay and packet loss requirements are very stringent. In a real-time service case such as a circuit switched (CS) call case there is a need for maintaining the call without interruptions. If the signalling radio bearer (SRB) is run on HSPA, various problems are known to occur in several mobility scenarios including urban canyon scenarios. The reason is that the serving high-speed downlink packet access (HSDPA) cell in the active set may get weak very rapidly. The serving cell may become too weak to complete the handover procedure which requires getting the handover command received correctly via the already weaker cell after the user equipment device has sent the handover measurement.

In the 3GPP TSG-RAN WG1 #52 discussion paper R1-080815 with the title "Improving Reliability of HS-PDSCH Serving Cell Change Procedure" authored by QALCOMM Europe, several proposals for enhancing HS-DSCH Serving Cell Change Procedures have been made. A central point of these proposals is to allow the user equipment device to receive the serving cell related information from the target cell/target nodeB instead of the source nodeB/previous serving cell. At the same time, the overall procedure is controlled at the radio network controller RNC.

One problem of proposals of this type is how to transmit the cell change information from the target cell to the user equipment device. The solution proposed in the document R1-080815 includes monitoring a high-speed shared control channel (HS-SCCH) from the target cell while still decoding HS-DSCH data transmission (HS-SCCH and HS-PDSCH) from the source cell. The requirement for the user equipment to simultaneously receive HS-DSCH transmissions from one cell and monitor the HS-SCCH of another cell is increasing the complexity of the implementations and thus is not desirable.

One other solution proposed in R1-080815 was to introduce a dedicated signalling channel (referred to as Serving Cell Change Channel, SCCCH), where a specific resource is allocated in the candidate target cell for each user that may be changing cells. The proposed design for the channel is such that it would be less complex for the user equipment to receive it while receiving HS-DSCH data transmission from the source cell than receiving the shared HS-SCCH channel, but it would require the network to allocate a dedicated resource in the potential target cell for each user equipment that may be switching cells. However, providing a dedicated resource for each user equipment for signalling one message only is very resource intensive and leads to low resource utilisation and thus increases the cost of the base station equipment.

### 3. Summary of the Invention

It is an object of the invention to provide a method for performing a serving cell change for a user equipment device in a high-speed packet access (HSPA) enabled wireless telecommunication network with an improved use of resources and a with a lower complexity user equipment device implementing such a method when comparing to the prior art solutions.

The invention starts from a method for performing a serving cell change for a user equipment device in a HSPA enabled wireless telecommunication network, wherein the user equipment device may be running a real time service using the high-speed packet access (HSPA) over a serving cell. The user equipment device performs the steps of measuring the signal strength of cells out of an active set of cells of the wireless telecommunication network, deciding whether at least one target cell out of the active set provides stronger signals than the serving cell, decoding signals said target cell if the target base station provides stronger signals than the serving cell and performing the serving cell change to the target cell upon receiving the serving cell change indication information from the new target cell.

According to one aspect of the invention, it is proposed that the serving cell change indication is decoded by the user equipment device in at least one transmission/reception gap between periodic packet transmissions of the real-time service. In periodic real-time services such as circuit switched voice services, typically only a low data rate compared to the maximum HSPA data rate is used. For circuit switched voice services, typically 12.2 kbps are used. One voice packet arrives from the voice encoder every 20 ms and is transmitted over the air in one 2 ms HS-DSCH (As the control channel, HS-SCCH starts 1.33 ms before the data channel, HS-PDSCH, the actual transmission duration is 3.33 ms). As a consequence, there is a gap in the order of 16 ms in downlink for the intra-frequency measurements of the user equipment device every 20 ms. Intra-frequency measurements including synchronization, signal level and BCCH decoding may take place in parallel to data reception such that there may be no need to read any other channels except BCCH.

The 3GPP release 7 specifications include the possibility of continuous packet connectivity (CPC) for HSPA which enables discontinuous transmission (DTX) and reception (DRX) when the connection data rate is low. The present invention employs in particular DRX. By using the gaps between consecutive data packets being transmitted from the serving cell the user equipment can listen to the possible HS-SCCH transmission indicating the serving cell change from the candidate target cell during the gaps. This way a shared channel can be used for indicating the serving cell change from the target cell, but avoid the requirement for the user equipment to receive simultaneously the HS-SCCH from the target cell and HS-DSCH data transmission from the source cell.

Due to the invention, the serving HSDPA/HSPA cell change is getting faster than possible with today's specification and less dependent from the previously serving cell, which may be getting weaker. The consequence is a reduced number of call drops. A further advantage of the invention is that it may be implemented without major changes in the call network and with only slight and easy to implement changes in the nodeB algorithms.

Moreover, it is proposed that the method comprises the steps of receiving the measurement report from the user equipment device by the radio network controller, deciding if the handover of the real-time service from the serving cell to the target cell shall take place based on the measurement report and transmitting at least one timing parameter relating to the transmission and/or reception gap between periodic transmissions of the real-time service to the target cell. This enables an easy synchronisation allowing an efficient use of the DRX channel. The serving cell change indication may be transmitted in one or more discontinuous reception periods assigned to the user equipment device, e.g. until the serving cell change is completed, until the user equipment device acknowledges the message or until a predetermined number of attempts was unsuccessful.

Since the method employs the gaps between the transmission packets, it is further proposed to determine a data rate of the real-time service and to check if it exceeds the predetermined threshold. If this is the case, a separate mechanism to ensure gaps in the data transmission may need to be employed to a fall-back to old serving cell change method is used. It is noted that for circuit switched voice services, the data rates are sufficiently low to guarantee sufficiently large transmission and reception gaps. Therefore, for this particular type of real-time service, the threshold-check may be avoided.

A verification of the successful serving cell change may be achieved if the target cell transmits the serving cell change acknowledgement message to the radio network controller upon receiving the timing parameter.

If for some reason the radio network controller RNC does not instruct the serving cell change, the procedure can be terminated without additional signalling if the decoding of the control channel of the target cell is performed only for a predetermined period of time and stops if no serving cell change indication is received within this period of time. The normal operation including DRX may then be resumed in the current/previous serving cell.

A further aspect of the invention relates to a user equipment device for use in a method of the above-described type. The user equipment device may in particular include means for decoding at least one control channel of the target cell, wherein the means is configured to receive the serving cell change indication transmitted in a transmission and/or reception gap between periodic packet transmissions of the real-time service.

Further characterizing features and the advantages thereof will become apparent from the enclosed figures and the following description thereof. The following description relates to one possible embodiment of the invention and is not meant to limit the scope of protection as defined in the claims in anyway. The skilled person will easily find other combinations or sub-combinations of the characterizing features of the invention when trying to employ the invention in specific scenarios.

### 4. Brief Description of the Drawings

- Fig.: 1 shows a diagram illustrating a telecommunication system including a user equipment device, a serving cell, and a target cell upon performing a serving cell change in a HSPA telecommunication network.
- Fig.: 2 illustrates the timing of packet transmissions in a circuit switched voice service.

### 5. Detailed description of an embodiment of the invention

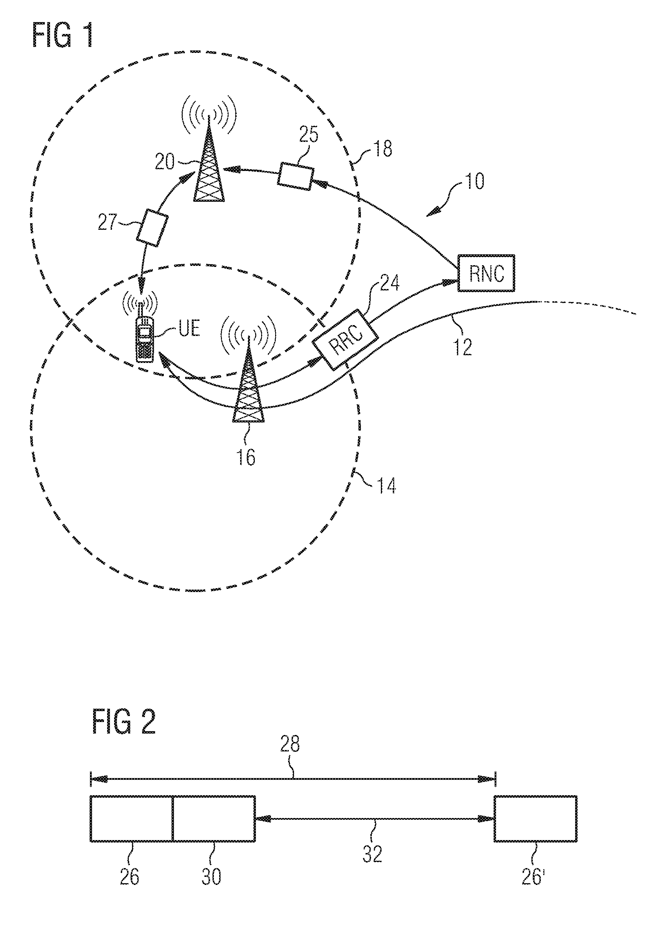

Fig. 1 illustrates a method for performing the serving cell change for a user equipment device UE in a high-speed packet access enabled wireless telecommunication network 10, wherein the user equipment device UE runs a real-time service 12. The user equipment device UE terminates one or more radio bearers supported by a serving cell 14. The serving cell 14 is generated by a nodeB 16 of the telecommunication network 10.

In addition, the user equipment device UE is located within the coverage of one or more further cells including a target cell 18 generated by a nodeB 20. The entire network 10 is controlled by a radio network controller RNC which configures the active set of available cells for the user equipment device UE. One of the cells out of the active set is the serving cell 14 which provides the wireless connections of high-speed downlink packet access (HSDPA) and high-speed uplink packet access (HSUPA).

The user equipment device UE is measuring the signal strength of all cells out of the active set of cells of the wireless telecommunication network 10 and will report the results to the radio network controller RNC either periodically or when a specific event (e.g. a cell becoming x dB better than the current serving cell) takes place. The reporting configuration is under the RNCs control.

When the criteria for triggering the measurement are fulfilled, the user equipment device UE sends a measurement report in the uplink direction. The measurement report is included in an RRC message 24.

Once the measurement report is sent successfully, and if a particular cell which is selected as the target cell 18 is stronger then the actually serving cell 14, the user equipment device UE starts to decode the HS-SCCH or HS-SCCH/HS-PDSCH or a possible new channel on the target cell 18 during the time periods constituting gaps between periodic packet transmissions of the real-time service.

When the RNC makes the decision to change the serving cell 14 to the target cell 18 based on the RRC message 24, it will indicate this in a message 25 to the target cell 18 the discontinuous reception (DRX) possibly with timing parameters of the user equipment device UE. These timing parameters relate to the timing of the transmission gaps between the periodic packet transmissions of the real-time service 12.

If the user equipment device UE receives via the HS-SCCH or a new dedicated control channel in a message 27 the indication that serving cell change is to take place, it will make the cell, where it received this information from, the serving HSDPA/HSUPA cell. The corresponding HSDPA/HSUPA channels of the target cell 18 have been given as pre-configuration. If on the other hand no indication to change the serving cell is received, the normal operation including DRX is resumed in the current serving cell 14.

If the real-time service run by the user equipment device is a circuit switched voice service, the timings of the data packets are illustrated in Fig. 2. Two consecutive data packets 26, 26' are separated by a 20 ms packet interval 28 between the start timings of the data packets 26, 26'. The packets 26, 26' are transmitted over the air in a guard interval 30 of 2 ms, such that a remaining gap 32 between the end of the guard interval 30 and the next data packet 26' lasts for 16 ms. During this frame, the user equipment device UE may decode the control channel of the target cell 18 in order to receive the serving cell change indication and, if necessary, the channel information from the target cell 18.

## Claims

1. Method for performing a serving cell change for a user equipment device (UE) in a high-speed packet access enabled wireless telecommunication network (10), wherein said user equipment device (UE) performs the steps of:
- measuring the signal strengths of cells (14, 18) out of an active set of cells of the wireless telecommunication network (10),
- sending a measurement report with a result of said measurement to a radio network controller (RNC) of said wireless telecommunication network (10),
- deciding whether at least one target cell (18) out of the active set provides stronger signals than said serving cell (14),
- decoding at least one control channel of said target cell (18),
- performing a serving cell change to the target cell (18) upon receiving a serving cell change indication over the control channel of the target cell (18),
**characterized in that** said serving cell change indication is decoded by the user equipment device (UE) in at least one transmission/receptin gap (32) between periodic packet transmissions and/or receptions relating to the user equipment device (UE).

2. Method according to claim 1, wherein the user equipment device (UE) runs a real-time service (12) using said high-speed packet access.

3. Method according to claim 1, wherein the radio network controller performs the steps of:
- receiving said measurement report from the user equipment device (UE),
- deciding if a serving cell change from the serving cell (14) to the target cell (18) shall take place based on said measurement report, and
- transmitting at least one timing parameter relating to the transmission and/or reception gaps (32) of the packet transmissions and/or receptions relating to the user equipment device (UE) to the target cell (18) .

4. Method according to one of the preceding claims, **characterized in that** said serving cell change indication is decoded by the user equipment device (UE) in at least one discontinuous reception period assigned to said user equipment device (UE).

5. Method according to one of the preceding claims, **characterized in that** the target cell (18) transmits a serving cell change acknowledgement message to the radio network controller (RNC) upon receiving said timing parameter or upon successful transmission of the serving cell change indication.

6. Method according to one of the preceding claims, **characterized in that** the user equipment device (UE) receives the control channel of the target cell (18) for a possible presence of the serving cell change indication for a predetermined period of time and stops the receiving if no indication is received within this period of time.

7. User equipment device for use in a high-speed packet access enabled wireless telecommunication network (10), wherein said user equipment device (UE) comprises:
- means for measuring the signal strengths of cells (14, 18) out of an active set of cells of the wireless telecommunication network (10),
- means for sending a measurement report (24) with a result of said measurement to a radio network controller (RNC) of said wireless telecommunication network (10),
- means for deciding whether at least one target cell out (18) of the active set provides stronger signals than said serving cell (14),
- means for decoding at least one control channel of said target cell (18),
- mans for performing a serving cell change to the target cell (18) upon receiving a serving cell change indication over the control channel of the target cell (18),
**characterized in that** said means for decoding at least one control channel of said target cell is configured to receive the serving cell change indication is decoded by the user equipment device in a transmission and/or reception gap (18) between periodic packet transmissions or receptions relating to the user equipment device (UE).

8. Method according to claim 8, wherein the user equipment device (UE) runs a real-time service (12) using said high-speed packet access.
